# EUROPEAN PATENT APPLICATION

(11) **EP 4 770 070 A1**
(43) Date of publication of application: **01.07.2026**
(21) Application number: 24879999.1
(22) Date of filing: 27.09.2024
(51) Int. Cl.: H04M 1/72436, H04M 1/72409, H04M 1/247, H04M 3/533

(54) **ELECTRONIC DEVICE FOR PROVIDING NOTIFICATION ABOUT RECEIVED MESSAGE, OPERATING METHOD THEREOF, AND STORAGE MEDIUM**

(30) Priority: 19.10.2023 KR 20230140059; 02.11.2023 KR 20230150103
(71) Applicant: Samsung Electronics Co., Ltd., Suwon-si, Gyeonggi-do 16677 (KR)
(72) Inventor: JANG, Jihoon, Suwon-si, Gyeonggi-do 16677 (KR)
(74) Representative: Gulde & Partner
(86) International application number: PCT/KR2024/014758
(87) International publication number: WO 2025/084660

(57) **Abstract**

According to one embodiment, a storage medium for storing at least one computer-readable instruction can be provided. When executed by at least one processor of an electronic device, the at least one instruction can cause the electronic device to perform at least one operation. The at least one operation can include the operations of identifying received message-related information including a plurality of items and pieces of information corresponding to each of the plurality of items; identifying status information of a user; identifying an output message generated on the basis of the status information of the user and at least one piece of information corresponding to at least some of the plurality of items; and providing a voice message corresponding to the output message. Other various embodiments are possible.

## Description

### [Technical Field]

The disclosure relates to an electronic device for providing a notification about a received message, a method of operating the same, and a storage medium

### [Background Art]

Various services and additional functions provided through electronic devices such as smartphones are gradually increasing. In order to increase the effective value of such electronic devices and satisfy various user needs, communication service providers or electronic device manufacturers have provided various functions and competitively developed electronic devices that are differentiated from those of other companies. Accordingly, various functions provided through the electronic device are being increasingly advanced. Recently, various types of intelligence services for electronic devices have been provided.

The information may be provided as the related art to help understanding of the disclosure. None of the above may be claimed as prior art related to the disclosure, or used to determine the prior art.

### [Detailed Description of the Invention]

### [Technical Solution]

According to an embodiment, a computer-readable storage medium storing at least one instruction may be provided. The at least one instruction may cause, when executed by at least one processor of an electronic device, the electronic device 101 to perform at least one operation. The at least one operation may include an operation of identifying information associated with a received message including a plurality of items and a plurality pieces of information respectively corresponding to the plurality of items. The at least one operation may include an operation of identifying status information of a user The at least one operation may include an operation of identifying an output message which is generated based on the status information of the user and at least one piece of information respectively corresponding to at least one item of the plurality of items. The at least one operation may include an operation of providing a voice message corresponding to the output message.

According to an embodiment, a method of operating an electronic device may be provided. The method of operating the electronic device may include an operation of identifying information associated with a received message including a plurality of items and a plurality of pieces of information respectively corresponding to the plurality of items. The method of operating the electronic device may include an operation of identifying status information of a user. The method of operating the electronic device may include an operation of identifying an output message which is generated based on the status information of the user and at least one piece of information respectively corresponding to at least one item of the plurality of items. The method of operating the electronic device may include an operation of providing a voice message corresponding to the output message.

According to an embodiment, the electronic device may include memory and a processor operatively connected to the memory. The memory may store at least one instruction. The at least one instruction may cause, when executed by at least one processor of an electronic device, the electronic device 101 to perform at least one operation. The at least one operation may include an operation of identifying information associated with a received message including a plurality of items and a plurality pieces of information respectively corresponding to the plurality of items. The at least one operation may include an operation of identifying status information of a user The at least one operation may include an operation of identifying an output message which is generated based on the status information of the user and at least one piece of information respectively corresponding to at least one item of the plurality of items. The at least one operation may include an operation of providing a voice message corresponding to the output message.

According to an embodiment, a computer-readable storage medium storing at least one instruction may be provided. The at least one instruction may cause, when executed by at least one processor of an electronic device, the electronic device to perform at least one operation. The at least one operation may include an operation of identifying information associated with a received message including a plurality of items and a plurality pieces of information respectively corresponding to the plurality of items. The at least one operation may include an operation of identifying status information of a user The at least one operation may include an operation of providing a first output message including at least part of information corresponding to content item of the plurality of items, based on the status information of the user being first status information, or providing a second output message including summary information associated with the information corresponding to the content item, based on the status information of the user being second status information different from the first status information.

According to an embodiment, a method of operating an electronic device may be provided. The method of operating the electronic device may include an operation of identifying information associated with a received message including a plurality of items and a plurality of pieces of information respectively corresponding to the plurality of items. The method of operating the electronic device may include an operation of identifying status information of a user. The method of operating the electronic device may include an operation of providing a first output message including at least part of information corresponding to content item of the plurality of items, based on the status information of the user being first status information, or providing a second output message including summary information associated with the information corresponding to the content item, based on the status information of the user being second status information different from the first status information.

According to an embodiment, the electronic device may include memory and a processor operatively connected to the memory. The memory may store at least one instruction. The at least one instruction may cause, when executed by at least one processor of an electronic device, the electronic device 101 to perform at least one operation. The at least one operation may include an operation of identifying information associated with a received message including a plurality of items and a plurality pieces of information respectively corresponding to the plurality of items. The at least one operation may include an operation of identifying status information of a user. The at least one operation may include an operation of providing a first output message including at least part of information corresponding to content item of the plurality of items, based on the status information of the user being first status information, or providing a second output message including summary information associated with the information corresponding to the content item, based on the status information of the user being second status information different from the first status information.

### [Brief Description of Drawings]

FIG. 1 is a block diagram of an electronic device within a network environment according to an embodiment.
FIG. 2A is a flowchart illustrating a method of operating the electronic device according to an embodiment.
FIG. 2B is a diagram illustrating a received message and an output message according to an embodiment.
FIG. 2C is a diagram illustrating the entity to perform the operation of the electronic device according to an embodiment.
FIG. 3A is a flowchart illustrating a method of operating the electronic device according to an embodiment.
FIG. 3B is a flowchart illustrating a method of operating the electronic device according to an embodiment.
FIG. 4A is a flowchart illustrating a method of operating the electronic device according to an embodiment.
FIG. 4B is a diagram for illustrating processing of an additional command according to an embodiment.
FIG. 5A is a flowchart illustrating a method of operating the electronic device according to an embodiment.
FIG. 5B is a flowchart illustrating a method of operating the electronic device according to an embodiment.
FIG. 6 is a flowchart illustrating a method of operating the electronic device according to an embodiment.
FIG. 7 is a flowchart illustrating a method of operating the electronic device according to an embodiment.
FIG. 8A is a flowchart illustrating a method of operating the electronic device according to an embodiment.
FIG. 8B is a diagram illustrating a connection with an external electronic device according to an embodiment.
FIG. 9A is a flowchart illustrating a method of operating the electronic device according to an embodiment.
FIG. 9B is a diagram illustrating output of a voice message according to an embodiment.
FIG. 10A is a flowchart illustrating a method of operating the electronic device according to an embodiment.
FIG. 10B is a diagram illustrating output of a voice message according to an embodiment.
FIG. 11 is a diagram illustrating the entity providing a function according to an embodiment.
FIG. 12 is a flowchart illustrating a method of operating the electronic device according to an embodiment.

### [Mode for Carrying out the Invention]

Hereinafter, embodiments of the disclosure will be described in detail with reference to the accompanying drawings so that those skilled in the art to which the disclosure belongs can easily implement the disclosure. However, the disclosure may be implemented in various different forms and is not limited to embodiments set forth herein. In connection with the description of the drawings, the same or similar reference numerals may be used for the same or similar elements. Furthermore, in the drawings and relevant descriptions, descriptions of well-known functions and configurations may be omitted for clarity and brevity.

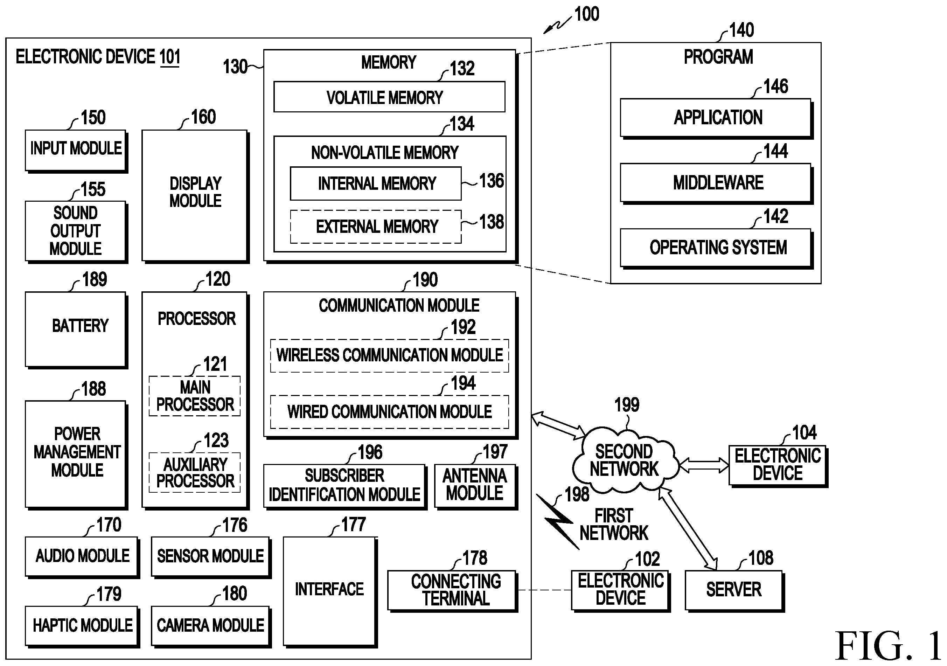

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

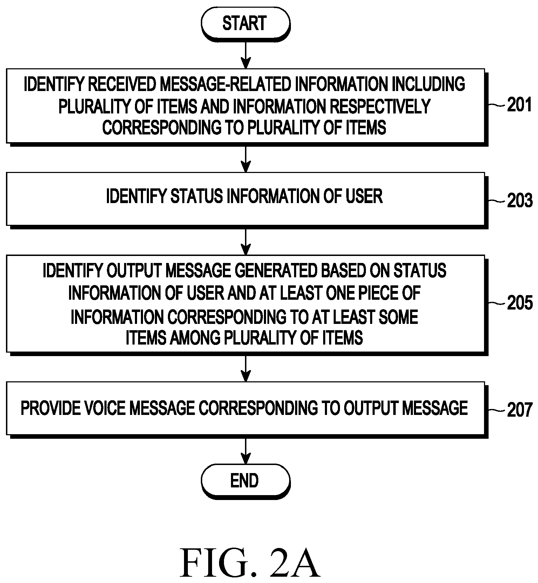

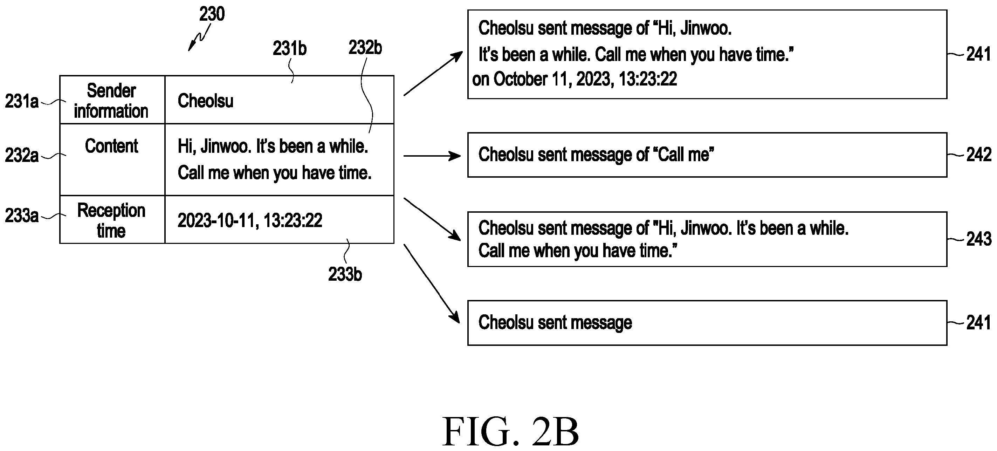

FIG. 2A is a flowchart illustrating a method of operating the electronic device according to an embodiment. The embodiment of FIG. 2A will be described with reference to FIG 2B. FIG. 2B is a diagram illustrating a received message and an output message according to an embodiment. In the following embodiments, respective operations may be sequentially performed but the sequential performance is not necessary. For example, orders of the operations may be changed, and at least two operations may be performed in parallel.

Referring to FIG. 2A and FIG. 2B together, according to an embodiment, the electronic device 101 (e.g., the processor 120) may identify received message-related information 230 including a plurality of items 231a, 232a, and 233a and information 231b, 232b, and 233b corresponding the plurality of items, respectively, in operation 201. For example, the electronic device 101 may receive a message. The electronic device 101 may identify information 231b corresponding to the sender information item 231a, as the message-related information 230 received. Those skilled in the art will understand that the information 231b corresponding to the sender information item 231a may be any information that is used for identification in the message transmission/reception service (or application or program), such as a phone number, contact information (e.g., "Cheolsu" in FIG. 2B) corresponding to the phone number, and/or service identification information (e.g., subscription identification information or a nickname, but there is no limit). The electronic device 101 may identify information 232b corresponding to a content item 232a, as the received message-related information 230. The information 232b corresponding to the content item 232a may be text including a message, for example, "Hi, Jinwoo. It's been a while. Call me when you have time" as in FIG. 2B, but there is no limit thereto. The electronic device 101 may identify information 233b corresponding to a receiving time item 233a, as the received message-related information 230. The information 233b corresponding to the reception time item 233a may be, for example, information (e.g., "2023-10-11, 13:23:22" as in FIG. 2B) on the time at which the message is received, but is not limited thereto. Meanwhile, the items 231a, 232a, and 233a in FIG. 2B and the information 231b, 232b, and 233b corresponding to the plurality of items, respectively, are merely illustrative, and there are no limits to the number of items, their types, and/or the expression formats of the corresponding information.

For example, the electronic device 101 may identify the received message-related information 230 by receiving a message, extracting information from the received message, processing the extracted information by using previously stored information, and/or identifying information associated with processing of the received message, but there is no limit to the identification method. Meanwhile, an external electronic device (e.g., the electronic device 102 or 104 and/or the server 104 of FIG. 1) other than the electronic device 101 may receive a message. The electronic device 101 may transmit and/or receive data to and/or from an external electronic device. The external electronic device may provide the electronic device 101 with the received message-related information 230. As described above, the electronic device 101 may be implemented to receive the message-related information 230 from the external electronic device, and there is no limit to the method of identifying the same.

According to an embodiment, the electronic device 101 may identify status information of the user in operation 203. The electronic device 101 may identify an output message generated based on the status information of the user and at least one piece of information corresponding to at least some of the plurality of items in operation 205. For example, the electronic device 101 may identify, as the status information of the user, movement sensing data identified by the electronic device 101 and/or the external electronic device, biometric sensing data identified by the electronic device 101 and/or the external electronic device, position sensing data identified by the electronic device 101 and/or the external electronic device, information associated with a connection state with the external electronic device, identification information of an executed application, and/or status information of the application, but there is no limit to the type thereof. The electronic device 101 may identify (or generate) one of the output messages 241, 242, 243, and 244 by using not only the received message-related information 230 as in FIG. 2B but also the identified status information of the user.

For example, based on the status information of the user being first status information, the electronic device 101 may identify the first output message 241, based on the received message-related information 230. For example, the first output message 241 may be generated using all of the information 231b corresponding to the sender information item 231a, the information 232b corresponding to the content item 232a, and the information 233b corresponding to the reception time item 233a. The information 232b corresponding to the content item 232a may include, for example, at least a part of the entire content included in the message.

For example, based on the status information of the user being second status information, the electronic device 101 may identify the second output message 242, based on the received message-related information 230. For example, the second output message 242 may be generated using the information 231b corresponding to the sender information item 231a and the information 232b corresponding to the content item 232a. For example, the information 233b corresponding to the reception time item 233a may not be used for the generation of the second output message 242, and/or may not be included in the second output message 242, but this is not limiting. For example, the second output message 242 may also include summary information (e.g., "Please call me") of information 232b corresponding to the content item 232a. For example, the electronic device 101 may directly generate summary information of information 232b corresponding to the content item 232a by using the information 232b corresponding to the content item 232a, or may make a request for summary information to an external electronic device and receive the summary information in response thereto. The electronic device 101 and/or the external electronic device may provide summary information by using a program (or algorithm, and/or artificial intelligence model) that provides summary information. The artificial intelligence model that provides the summary information may be, for example, a large language model (LLM), but there is no limit to the type thereof.

For example, based on the status information of the user being third status information, the electronic device 101 may identify the third output message 243, based on the received message-related information 230. For example, the third output message 243 may be generated using the information 231b corresponding to the sender information item 231a and the information 232b corresponding to the content item 232a. For example, the information 233b corresponding to the reception time item 233a may not be used for the generation of the third output message 243, and/or may not be included in the third output message 243, but this is not limiting. For example, the third output message 243 may also include at least a part of the information 232b corresponding to the content item 232a.

For example, based on the status information of the user being fourth status information, the electronic device 101 may identify the fourth output message 244, based on the received message-related information 230. For example, the fourth output message 244 may be generated using information 231b corresponding to the sender information item 231a. For example, the information 232b corresponding to the content item 232a and the information 233b corresponding to the reception time item 233a may not be used for generating the fourth output message 244 and/or may not be included in the fourth output message 244, but this is not a limitation.

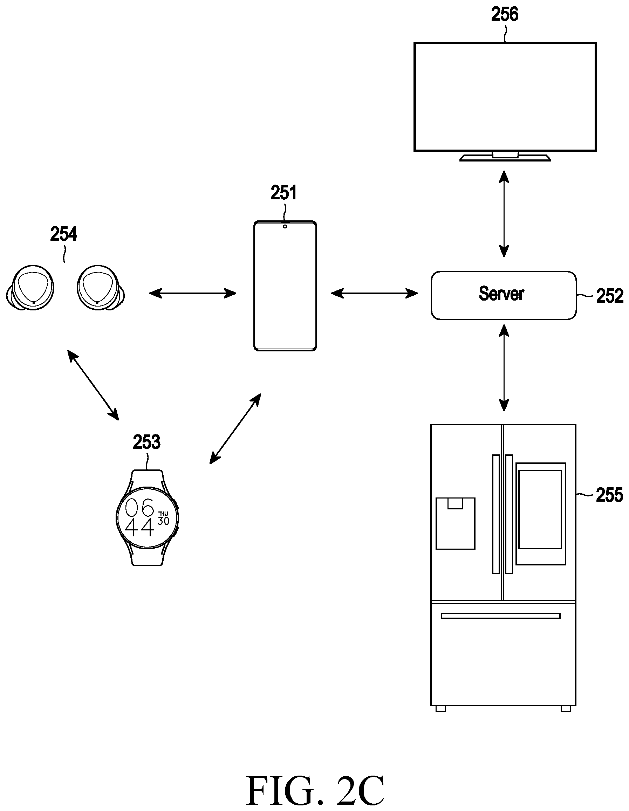

According to an embodiment, the electronic device 101 may provide a voice message corresponding to the output message in operation 207. As described above, the electronic device 101 may identify one of the output messages 241, 242, 243, and 244, based on the user status information (e.g., one of the first status information to the fourth status information) and the received message-related information 230. The electronic device 101 may provide a voice message, based on a result of text to speech (TTS) for one of the output messages 241, 242, 243, and 244. For example, the electronic device 101 may output a voice message (or an audio signal) through the audio output module 155. For example, the electronic device 101 may transmit data that causes an external electronic device to output a voice message to the external electronic device through the communication module 190, in which case the external electronic device may output the voice message, based on the received data. There is no limit to the type of data here, and/or there is no limit to the presence or number of relay devices for relaying data between the external electronic device for outputting the voice message and the electronic device 101. For example, there is no limit to the entity and/or a combination of a plurality of entities of identifying the received message-related information, identifying the user status information, identifying the output message, identifying the voice message, and/or outputting the voice message, which will be described with reference to FIG. 2C.

FIG. 2C is a diagram illustrating an entity that performs operations of an electronic device according to an embodiment.

In an example, the smartphone 251 may be implemented to receive a message and to output a voice message corresponding thereto independently, without being connected to another external electronic device. The smartphone 251 (e.g., the electronic device 101 of FIG. 1) may, for example, receive a message. The smartphone 251 may identify information related to the received message. The smartphone 251 may identify status information of the user, based on data sensed by at least one sensor (e.g., the sensor module 176 and/or the camera module 180 of FIG. 1, but there is no limit thereto) included in the smartphone 251 and/or connected to the smartphone 251. The smartphone 251 may identify an output message by using the received message-related information and the status information of the user. The smartphone 251 may store a program (or an algorithm and/or an artificial intelligence model) capable of generating various output messages, based on, for example, various pieces of status information of the user, and may identify an output message corresponding to received message-related information and user status information by using the same. The smartphone 251 may output a voice message through a speaker (e.g., the audio output module 155 of FIG. 1).

In an example, the smartphone 251 may be implemented to receive a message and to output a voice message corresponding thereto, based on, for example, the connection with the server 252 (e.g., the server 108 of FIG. 1). The smartphone 251 may, for example, receive a message. The smartphone 251 may identify information related to the received message. The smartphone 251 may identify status information of the user, based on data sensed by at least one sensor (e.g., a sensor included in the smart watch 253 and/or the audio output electronic device 254) included in the smartphone 251 or operatively connected to the smartphone 251. The smartphone 251 may make a request for generating an output message based on the received message-related information and the status information of the user to the server 252. For example, the server 252 may store a program (or algorithm and/or artificial intelligence model) capable of generating various output messages, based on various pieces of status information of the user, and may identify the output message corresponding to the received message-related information and the status information of the user by using the same. The server 252 may be implemented to include, for example, a sub-server for supporting a function for processing a voice message and a server (e.g., an LLM support server) for supporting a function for content summarization, but there is no limit to the implementation form. The server 252 may transmit the identified output message to the smartphone 251. In this case, the smartphone 251 may output a voice message, based on a TTS result for the output message. Alternatively, the server 252 may provide data indicating the TTS result for the output message to the smartphone 251. The smartphone 251 may, in this case, be configured not to perform TTS and to output the voice message, based on the received data. In another example, the smartphone 251 may be implemented to transmit data for outputting a voice message to the audio output electronic device 254 (e.g., a true wireless speaker (TWS) device) operatively connected to the smartphone 251, and the audio output electronic device 254 may output the voice message, based on the received data. For example, the smartphone 251 may also perform TTS, and data based on a TTS result may be provided to the audio output electronic device 254. Meanwhile, the smartphone 251 may be configured to transmit data directly through the operative connection with the audio output electronic device 254,or to transmit data through the relay of the smart watch 253, and there is no limit to the transmission method, whether a relay device is involved, and/or the number of relay devices. If data transmission through the relay of the smart watch 253 is required, the smartphone 251 may release the connection with the audio output electronic device 254 directly operatively connected thereto and induce the audio output electronic device 254 to connect to the smart watch 253, but the disclosure is not limited thereto. This may also be referred to as an auto switching function.

For example, the smart watch 253 may directly receive a message. The smart watch 253 may directly output a voice corresponding to a message or may provide the voice to the audio output electronic device 254 connected to the smart watch 253, without being connected to the smartphone 251.

In an example, the smart watch 253 may be operatively connected to the smartphone 251. For example, the smartphone 251 may receive a message. The smartphone 251 may provide smart watch 253 with received message-related information. The smart watch 253 may identify status information of the user, based on data sensed by a sensor included in the smart watch 253 and/or a sensor included in an external electronic device (e.g., the smartphone 251 and/or the audio output electronic device 254) operatively connected to the smart watch 253. The smart watch 253 may directly generate an output message based on the received message-related information and the status information of the user. Alternatively, the smart watch 253 may make a request for generating an output message based on the received message-related information and the status information of the user to the server 252 and/or the smartphone 251 directly or through a relay. For example, the smartphone 251 and/or the server 252 may store a program (or an algorithm, and/or an artificial intelligence model) capable of generating various output messages based on various pieces of stat information of the user, and may identify an output message corresponding to received message-related information and the status information of the user by using the same. The smartphone 251 and/or the server 252 may transmit the identified output message to the smart watch 253. In this case, the smart watch 253 may output a voice message, based on a TTS result for the output message. Alternatively, the smartphone 251 and/or the server 252 may provide data indicating the TTS result for the output message to the smart watch 253. The smart watch 253 may be implemented to output a voice message, based on the received data, without performing TTS in this case. The smart watch 253 may, for example, output a voice message through an internal speaker, or may provide the audio output electronic device 254 with data that causes the voice message to be output. The audio output electronic device 254 may output the voice message, based on the received data. For example, the smartphone 251, the server 252, the smart watch 253, and/or the audio output electronic device 254 may be implemented to include at least some components of the electronic device 101 of FIG. 1. It will be understood by those skilled in the art that the operation performed by the electronic device 101 according to the disclosure may be performed by one of the smartphone 251, the server 252, the smart watch 253, or the audio output electronic device 254, or may be performed by two or more of the plurality of devices.

In the meantime, some or all of the operations performed by the electronic device 101 according to the disclosure may be performed by home appliances, such as a refrigerator 255 or a TV 256, rather than a mobile device, such as the smartphone 251, the smart watch 253, and/or the audio output electronic device 254. The home appliances such as the refrigerator 255 or the TV 256 may perform at least some of the operations performed by the electronic device 101, without being connected to an external electronic device such as the smartphone 251, the server 252, or the smart watch 253. Alternatively, the home appliances, such as the refrigerator 255 or the TV 256, may perform at least some of the operations performed by the electronic device 101 through being connected to the external electronic device, such as the smartphone 251, the server 252, or the smart watch 253.

For example, the refrigerator 255 may directly receive a message to identify received message-related information, or may receive the received message-related information from the smartphone 251 directly or through a relay. The refrigerator 255 may identify the status information of the user, based on a sensor module included in the refrigerator 255 and/or a sensor module included in an external electronic device (for example, the smartphone 251, the smart watch 253, and/or the audio output electronic device 254, but not limited thereto) operatively connected to the refrigerator 255. The refrigerator 255 may generate an output message, based on directly received message-related information and status information of the user. Alternatively, a request for generating the data that causes reproduction of the output message or the voice message may be made to the server 252 (or another external electronic device), and the data that causes reproduction of the output message or the voice message may be received in response thereto. When the output message is generated (or received), the refrigerator 255 may output a voice message based, on a TTS result. Alternatively, the refrigerator 255 may output the generated (or received) voice message. The refrigerator 255 may transmit data that causes reproduction of the voice message to another external electronic device, and the reproduction of the voice message may also be performed by another external electronic device.

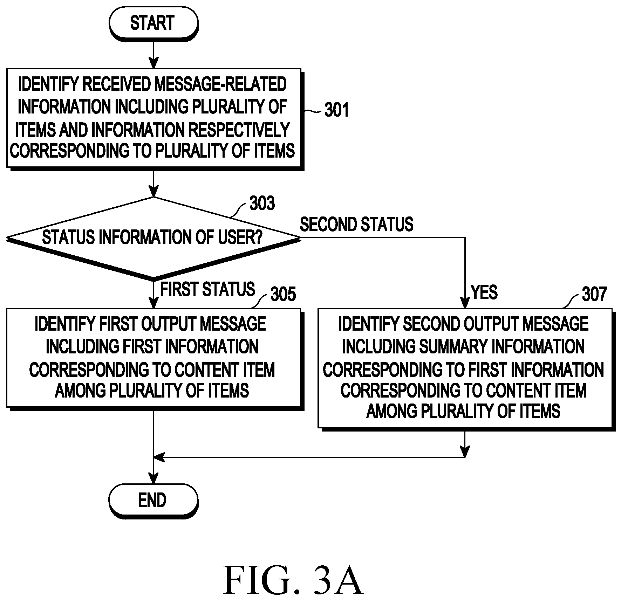

FIG. 3A is a flowchart illustrating a method of operating an electronic device according to an embodiment. In the following embodiments, respective operations may be sequentially performed but the sequential performance is not necessary. For example, orders of the operations may be changed, and at least two operations may be performed in parallel.

According to an embodiment, the electronic device 101 (for example, the processor 120) may identify received message-related information including a plurality of items and information corresponding to each of the plurality of items in operation 301. As described above, the electronic device 101 may generate received message-related information by receiving a message, or may receive the received message-related information from the external electronic device which has received the message, but there is no limit to a method of identifying the received message-related information. The electronic device 101 may identify status information of the user in operation 303. For example, the electronic device 101 may identify the status information of the user, based on at least one sensing data from the sensor module 176 and/or the camera module 180 included in the electronic device 101 and/or a sensor module included in the external electronic device. Alternatively, the electronic device 101 may receive the status information of the user from the external electronic device, but there is no limit to the method of identifying the same.

According to an embodiment, for example, when the status information of the user is the first status information, the electronic device 101 may identify a first output message including first information corresponding to a content item among the plurality of items in operation 305. For example, in the first information corresponding to the content item, the information 232b corresponding to the content item 232a of the received message-related information 230 in the embodiment of FIG. 2B may be "Hi, Jinwoo. It's been a while. Please, call me when you have time." The electronic device 101 may identify the output message 241 or 243 including the entire first information, as the first output message, based on the status information of the user being the first status information. The electronic device 101 may directly output the first voice message corresponding to the first output message or may output the same through another electronic device. For example, the first status information may be a state may be a good state even if the user's attention is distracted such as a state in which the user is not performing an activity, a state in which an application not requiring concentration is being executed, a state of an application not requiring concentration, a state in which an activity degree of the user is less than a threshold degree, a state in which the user is not driving, a state in which a vehicle in which the user is riding is stopped, or a state in which the speed of the electronic device 101 is less than a threshold speed, but this is only an example, and there is no limit thereto.

According to an embodiment, for example, when the status information of the user is the second status information, the electronic device 101 may identify a second output message including summary information corresponding to first information corresponding to the content item among the plurality of items in operation 307. The electronic device 101 may identify the output message 242 including summary information corresponding to the first information as the second output message, based on the status information of the user being the second status information. The summary information may be implemented as "Call me" that is the result of summarizing the first information "Hi, Jinwoo. It's been a while. Please call me when you have time," as included in the output message 242, but there is no limit to the summary method and/or the result. The summary information (or the second output message including the summary information) may be generated directly by the electronic device 101, or may be generated by an external electronic device and provided to the electronic device 101. The electronic device 101 may directly output the second voice message corresponding to the second output message or may output the same through another electronic device. For example, the second status information may be a state in which it is preferable that the user's attention is not dispersed such as a state in which the user is performing an activity, a state in which an application requiring attention is executed, a state of an application requiring attention, a state in which an activity degree of the user is equal to or greater than a threshold degree, a state in which the user is driving, a state in which a vehicle in which the user is riding is operated while being driven, or a state in which the movement speed of the electronic device 101 is equal to or greater than a threshold speed, but this is only an example, and there is no limit thereto.

As described above, the electronic device 101 may provide a voice message including the entire (or a part) of the information corresponding to the content item of the received message, or a voice message including summary information, according to the status information of the user.

Meanwhile, according to an implementation, the electronic device 101 may receive, from the user, for example, a summary request, such as "summarize it," while providing the voice message including all (or a part of) the information corresponding to the content item of the received message, according to the status information of the user. In this case, the electronic device 101 may be configured to stop providing the voice message including all (or a part of) the information corresponding to the content item, and to provide the voice message including the summary information in response to the summary request. Alternatively, the electronic device 101 may receive, from the user, for example, an interruption request such as "Stop" while providing the voice message including all (or a part of) the information corresponding to the content item of the received message, according to the status information of the user. In this case, the electronic device 101 may be implemented to stop providing the voice message including all (or a part of) the information corresponding to the content item in response to the summary request.

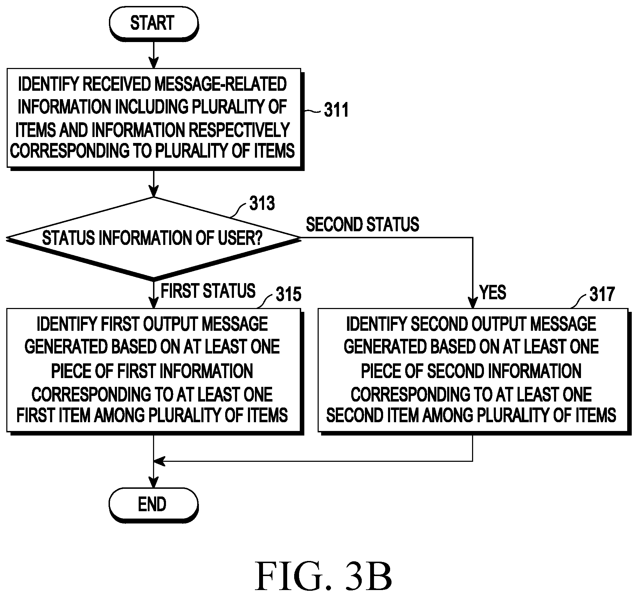

FIG. 3B is a flowchart illustrating a method of operating the electronic device according to an embodiment. In the following embodiments, respective operations may be sequentially performed but the sequential performance is not necessary. For example, orders of the operations may be changed, and at least two operations may be performed in parallel.

According to an embodiment, the electronic device 101 (for example, the processor 120) may identify received message-related information including a plurality of items and information corresponding to each of the plurality of items in operation 311. The electronic device 101 may identify status information of the user in operation 313. Since the method of identifying the received message-related information and/or the method of identifying the status information of the user have been described above, a detailed description thereof will not be repeated here. For example, when the status information of the user is first status information, the electronic device 101 may identify a first output message generated based on at least one first information corresponding to at least one first item among a plurality of items in operation 315. For example, as in the embodiment of FIG. 2B, based on the state of the user being the first status information, the sender information item 231a, the content item 232a, and the reception time item 233a may be identified as at least one first item. The electronic device 101 may identify, as a first output message, an output message 241 including information 231b, 232b, and 233b respectively corresponding to the sender information item 231a, the content item 232a, and the reception time item 233a, based on the status information of the user being the first status information. The electronic device 101 may directly output the first voice message corresponding to the first output message or may output the same through another electronic device. For example, the first status information may be a state in which the user's attention is dispersed but is in a good state, but this is only an example, and there is no limit.

According to an embodiment, for example, when the status information of the user is second status information, the electronic device 101 may identify a second output message generated based on at least one second information corresponding to at least one of the plurality of items in operation 317. Here, at least one second item and at least one first item may differ at least partially. For example, as in the embodiment of FIG. 2B, based on the state of the user being the second status information, the sender information item 231a may be identified as at least one second item. The electronic device 101 may, based on the status information of user being the second status information, identify the output message 244 including information (231b) corresponding to the sender information item 231a, as the second output message. The electronic device 101 may directly output the second voice message corresponding to the second output message or may output the same through another electronic device. For example, the second status information may be the state in which a user's attention is required as described above, but this is just an example and there is no limit thereto. As described above, the item associated with the output message may be configured to be different according to the status information of the user, but there is no limit. Meanwhile, it will be understood by those skilled in the art that at least some of the at least one first item may be included in the at least one second item, or at least some of the at least one second item may be included in the at least one first item. Alternatively, an item which should be constantly included in the output message may be configured, and the corresponding item may be implemented to be included in the output message regardless of the status information of the user.

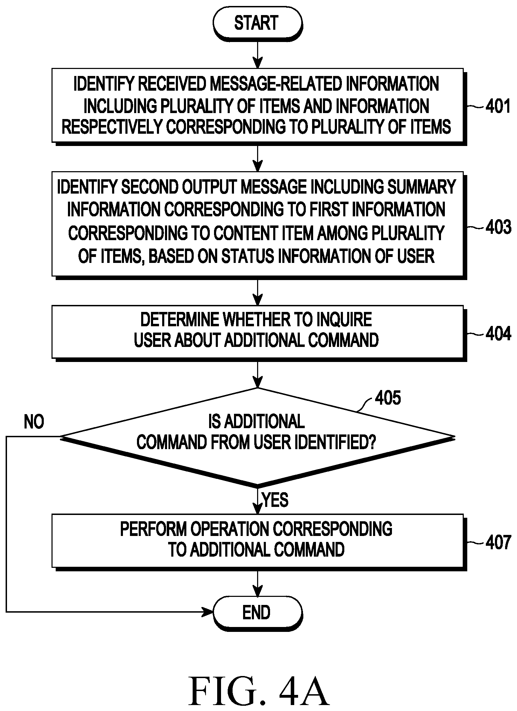

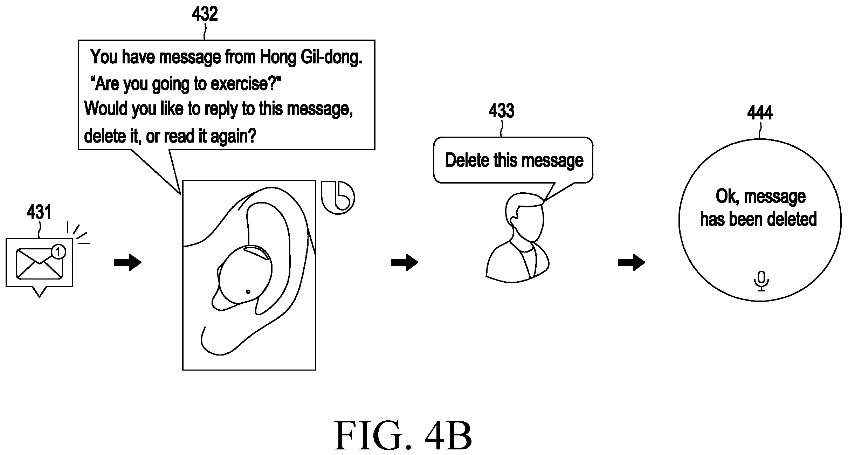

FIG. 4A is a flowchart illustrating a method of operating an electronic device according to an embodiment. The embodiment of FIG. 4A will be described with reference to FIG 4B. FIG. 4B is a diagram for illustrating processing of an additional command according to an embodiment. In the following embodiments, respective operations may be sequentially performed but the sequential performance is not necessary. For example, orders of the operations may be changed, and at least two operations may be performed in parallel.

According to an embodiment, the electronic device 101 (for example, the processor 120) may identify received message-related information including a plurality of items and information corresponding to each of the plurality of items in operation 401. For example, referring to FIG. 4B, the electronic device 101 may receive a message 431, and may identify received message-related information, based thereon. Alternatively, the electronic device 101 may also receive the received message-related information from an external electronic device that has received the message 431. The electronic device 101 may identify a second output message 432 including summary information corresponding to first information corresponding to a content item among a plurality of items, based on the status information of the user in operation 403. The electronic device 101 may output a voice message corresponding to the second output message 432 through an external electronic device (e.g., the audio output electronic device 254 in FIG. 4B), but there is no limit to the entity to output the voice message. Meanwhile, the second output message 432 may include information inquiring whether to input an additional command. Referring to FIG. 4B, the second output message 432 may include a part associated with a sender item (e.g., "Hong Gil-dong"), a part associated with summary information corresponding to a content item (e.g., "Are you going to exercise today?"), and a part inquiring whether to input an additional command (e.g., "Would you like to reply to this message, delete it, or read it again?"). According to an implementation, the electronic device 101 may determine whether to inquire of the user for an additional command in operation 404. For example, when a state of the user is a first state (e.g., a running situation), the electronic device 101 may not inquire about the additional command. If the state of user is a second state (e.g., light activity), it may also inquire about the additional command.

According to an embodiment, the electronic device 101 may identify whether an additional command from the user is identified in operation 405. When an additional command from the user is identified (operation 405 - yes), the electronic device 101 may perform an operation corresponding to the additional command in operation 407. For example, as in FIG. 4B, the electronic device 101 may identify an additional command 433 such as "Delete this message." The electronic device 101 may provide message deletion and information 444 indicating the message deletion as the operation corresponding to the additional command 433, but the operation is not limited thereto. For example, when the electronic device 101 identifies the additional command, such as "reply Yes," the electronic device 101 may perform at least one operation for transmitting, to the sender, a message to the effect of "Yes." For example, when identifying an additional command of "read it again," the electronic device 101 may output the voice message of "Are you going to exercise today?" that is summary information or output the entire content of the message (e.g., Hi, Cheolsu. This is Gil-dong. Are you going to exercise today?). Meanwhile, the inclusion of a part inquiring about whether to input an additional command in the output message when the voice message based on summary information such as in FIG. 4A and/or FIG. 4B is output is an example. The part inquiring about whether to input the additional command may be included in the output message regardless of the type of status information of the user or may be implemented to be included in the output message only in the case of a specific type of the status information of the user, and there is no limit.

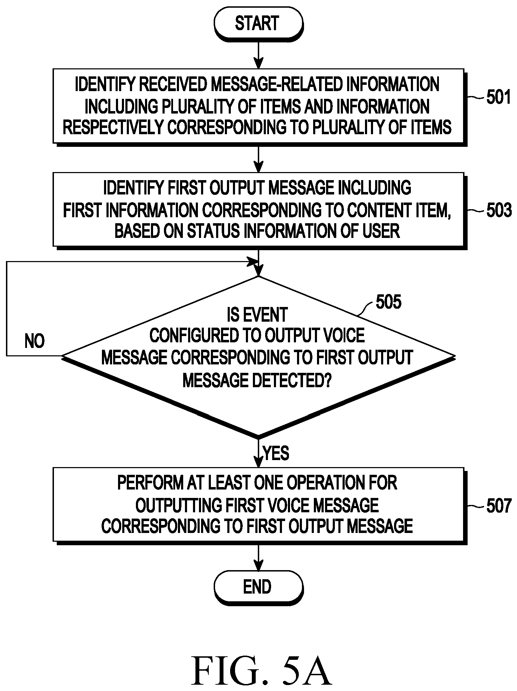

FIG. 5A is a flowchart illustrating a method of operating an electronic device according to an embodiment. In the following embodiments, respective operations may be sequentially performed but the sequential performance is not necessary. For example, orders of the operations may be changed, and at least two operations may be performed in parallel.

According to an embodiment, the electronic device 101 (for example, the processor 120) may identify received message-related information including a plurality of items and information corresponding to each of the plurality of items in operation 501. The electronic device 101 may identify a first output message including first information corresponding to a content item, based on status information of the user in operation 503. The electronic device 101 may identify whether an event configured to output a voice message corresponding to the first output message is detected in operation 505. The electronic device 101 may suspend (or refrain from) output of a first voice message corresponding to the first output message, and may identify whether the event configured for output is detected. While the output of the voice message is suspended, the electronic device 101 may temporarily store the first output message in a buffer (e.g., the memory 130 of FIG. 1). If no event is detected (operation 505 - No), the electronic device 101 may maintain suspension of outputting the first voice message corresponding to the first output message. When an event is detected (operation 505 - Yes), the electronic device 101 may perform at least one operation for outputting the first voice message corresponding to the first output message in operation 507. For example, the electronic device 101 may directly output the first voice message or transmit data that causes the output of the first voice message to an external electronic device.

According to an embodiment, for example, the electronic device 101 may be configured to suspend output of the voice message when the user status information is specified status information. For example, the electronic device 101 may be configured to suspend output of the speech message in the case that the user status information indicates a state of high-intensity activity, but the type thereof is not limited thereto. For example, the electronic device 101 may identify whether the user status information deviates from the predetermined status information according to whether an event is detected. For example, when the status information of the user is changed from a high-intensity activity state to a medium-intensity activity state, the electronic device 101 may identify that an event for outputting the voice message is detected. When the status information of the user is changed from the high-intensity activity state to the moderate-intensity activity state, the electronic device 101 may perform at least one operation for outputting the voice message.

For example, the electronic device 101 may suspend and then provide the output of the first voice message corresponding to the first output message, and may output the first voice message when the event configured for output is detected. In another example, the electronic device 101 may refrain from outputting the first speech message corresponding to the first output message, and may output a voice message corresponding to an adjusted output message when the event configured for output is detected. For example, when an output message is "You have a message from Hong Gil-dong," an adjusted output message may be implemented as "You have 1 detailed message from Hong Gil-dong. Shall I read it to you?" and there is no limitation on the adjustment method, which will be understood by those skilled in the art.

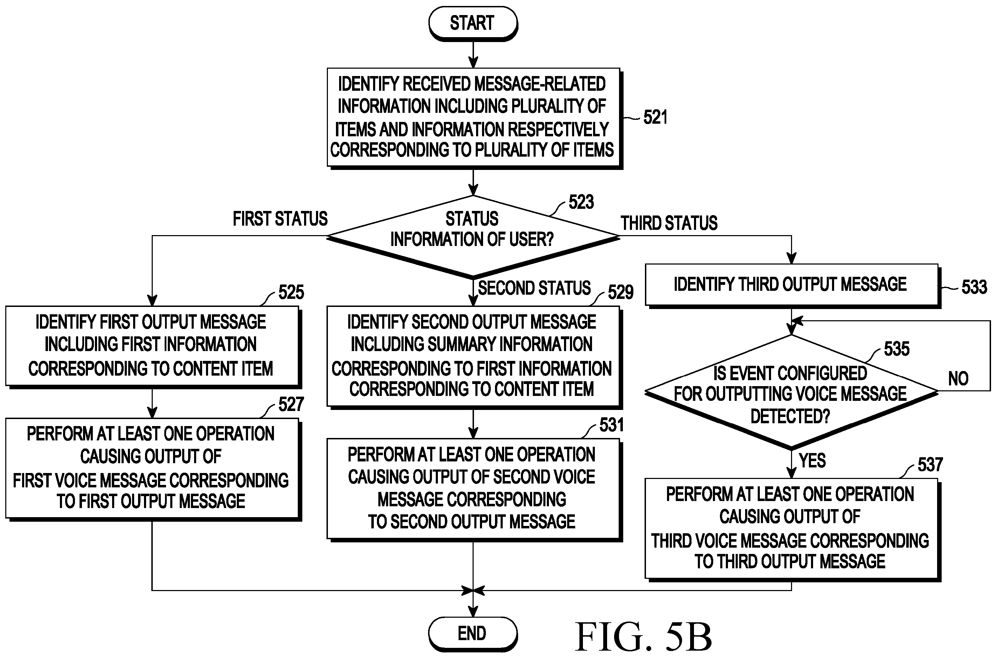

FIG. 5B is a flowchart illustrating a method of operating the electronic device according to an embodiment. In the following embodiments, respective operations may be sequentially performed but the sequential performance is not necessary. For example, orders of the operations may be changed, and at least two operations may be performed in parallel.

According to an embodiment, the electronic device 101 (for example, the processor 120) may identify received message-related information including a plurality of items and information corresponding to each of the plurality of items in operation 521. The electronic device 101 may identify status information of the user in operation 523. For example, the electronic device 101 may, based on a mode configured for outputting a voice message for message reception being activated (or selected), perform at least one operation for outputting the voice message. For example, based on the audio output electronic device 254 being connected to the electronic device 101, a corresponding mode (which may also be referred to as a hands-free mode) being selected by the user, and/or a function of notifying a message reception by voice being activated, the electronic device 101 may be configured to output the voice message for message reception.

When the user status information is first status information, the electronic device 101 may identify the first output message including first information corresponding to the content item in operation 525. The electronic device 101 may perform at least one operation that causes output of the first voice message corresponding to the first output message in operation 527. For example, the first status information may be a good state even if the attention is scattered, and may be a state of not exercising or a state of low-intensity activity, but there is no limit to the type thereof. Accordingly, the first output message including the first information corresponding to the content item including a relatively large amount of information may be identified.

When the user status information is second status information, the electronic device 101 may identify a second output message including summary information corresponding to the first information corresponding to the content item in operation 529. The electronic device 101 may perform at least one operation that causes output of the second voice message corresponding to the second output message in operation 531. For example, the second status information may be an intermediate intensity activity state, which is a state in which it is desirable that attention is not distracted, but the type thereof is not limited. Accordingly, the second output message including summary information may be identified.

When the user status information is third status information, the electronic device 101 may identify a third output message in operation 533. The electronic device 101 may identify whether an event configured for outputting the voice message is detected in operation 535. For example, the electronic device 101 may not immediately output the voice message corresponding to an output message, but may identify whether the event is detected while suspending the message output. For example, the third status information may be a state in which concentration is required, such as a high-intensity activity state, but the type thereof is not limited. If no event is detected (operation 535-No), the electronic device 101 may maintain the suspension of the output of the voice message. If the event is detected (operation 535-Yes), the electronic device 101 may perform at least one operation that causes output of a third voice message corresponding to the third output message in operation 537. The third output message may be, for example, the same as the second output message, or the same as the first output message, or may be implemented to be different from these, and there is no limit thereto. If the event is a change in the status information of the user from the third status information to the second status information, the electronic device 101 may perform at least one operation for outputting the voice message corresponding to the second output message corresponding to the second status information. If the event is a change in the status information of the user from the third status information to the first status information, the electronic device 101 may perform at least one operation for outputting the voice message corresponding to the first output message corresponding to the first status information.

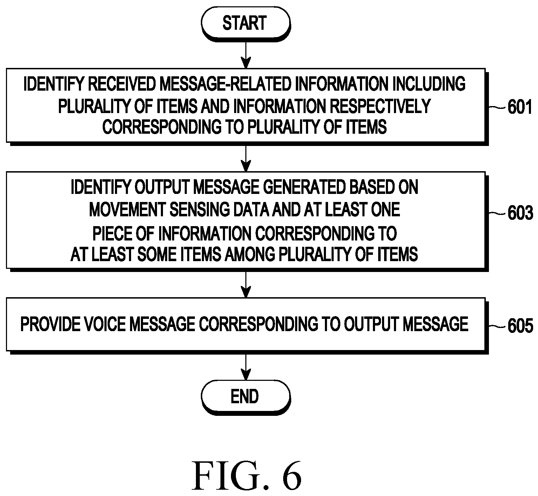

FIG. 6 is a flowchart illustrating a method of operating the electronic device according to an embodiment. In the following embodiments, respective operations may be sequentially performed but the sequential performance is not necessary. For example, orders of the operations may be changed, and at least two operations may be performed in parallel.

According to an embodiment, the electronic device 101 (for example, the processor 120) may identify received message-related information including a plurality of items and information corresponding to each of the plurality of items in operation 601. The electronic device 101 may identify an output message generated based on movement sensing data and at least one piece of information corresponding to at least some of the plurality of items in operation 603. The electronic device 101 may provide a voice message corresponding to the output message in operation 605. For example, the electronic device 101 may identify the output message using at least some of the plurality of items, based on at least one of movement sensing data provided by at least one sensor included in the electronic device 101 and/or at least one sensor included in an external electronic device operatively connected to the electronic device 101. For example, the electronic device 101 may identify the type and/or the intensity of activity, based on the movement sensing data (or the time-series data). For example, the electronic device 101 may identify that a pattern of the movement sensing data (or the time-series data) corresponds to a pattern of a walking state. In this case, the electronic device 101 may identify an output message corresponding to the walking state. For example, the electronic device 101 may identify that a pattern of the movement sensing data (or the time-series data) corresponds to a pattern of a running state, and that a running strength is a first running strength. The electronic device 101 may identify an output message corresponding to the running state and the first running strength. For example, the electronic device 101 may identify that a pattern of the movement sensing data (or the time-series data) corresponds to a pattern of the running state, and that the running strength is a second running strength. The electronic device 101 may identify an output message corresponding to the running state and the second running strength, which may differ from the output message corresponding to the first running strength. Alternatively, based on the running strength being the second running strength, the electronic device 101 may suspend the output of the voice message. Meanwhile, the type of the above-described activity and/or intensity of the activity are merely exemplary, and other parameters may be used additionally and/or alternatively. Alternatively, the parameter, such as the type of the activity and/or the intensity of the activity, may not be used, and a type and/or a content of the information included in the output message may be determined based on a value of at least one of movement sensing data.

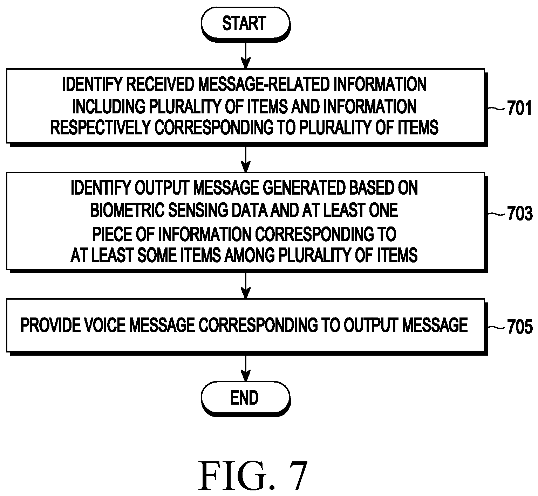

FIG. 7 is a flowchart illustrating a method of operating an electronic device according to an embodiment. In the following embodiments, respective operations may be sequentially performed but the sequential performance is not necessary. For example, orders of the operations may be changed, and at least two operations may be performed in parallel.

According to an embodiment, the electronic device 101 (e.g., the processor 120) may identify received message-related information including a plurality of items and information corresponding to each of the plurality of items in operation 701. The electronic device 101 may, in operation 703, identify an output message generated based on at least one piece of information corresponding to at least some of the items among biological sensing data (e.g., blood pressure, heart rate, body temperature, and/or concentration, but without any limitation) and/or a plurality of items. The electronic device 101 may provide a voice message corresponding to the output message in operation 705. For example, the electronic device 101 may identify an output message that uses at least some of the plurality of items, based on at least one biometric sensing data provided by at least one sensor included in the electronic device 101 and/or at least one sensor included in an external electronic device operatively connected to the electronic device 101. For example, the electronic device 101 may identify the type of the activity and/or intensity of the activity, based on the biometric sensing data (or the time-series data thereof). For example, the electronic device 101 may identify that the biometric sensing data (or the time-series data) corresponds to a range of the walking state. In this case, the electronic device 101 may identify an output message corresponding to the walking state. For example, the electronic device 101 may identify that the biometric sensing data (or the time-series data) corresponds to a range of the first running strength. The electronic device 101 may identify an output message corresponding to the first running strength. For example, the electronic device 101 may identify that the biometric sensing data (or the time-series data) corresponds to a second range of the running strength. The electronic device 101 may identify an output message corresponding to the second running strength, and the output message may be different from the output message corresponding to the first running strength. Alternatively, based on the running strength being the second running strength, the electronic device 101 may suspend the output of the voice message. Meanwhile, the type of the above-described activity and/or the intensity of the activity are merely exemplary, and additional and/or alternative parameters may also be used. Alternatively, the parameter, such as the type of the activity and/or the intensity of the activity, may not be used, and a type and/or a content of the information included in the output message may be determined based on a value of at least one of movement sensing data.

Meanwhile, according to an embodiment, the electronic device 101 may identify a type and/or an intensity of the activity by using all the at least one piece of movement sensing information described in FIG. 6 and the at least one piece of biometric sensing information described in FIG. 7. For example, the electronic device 101 may identify a type of activity using at least one piece of movement sensing information, and may identify a intensity of the activity using at least one piece of biometric sensing information. However, this is only an example, and there is no restriction to a method for identifying the type of activity and/or the intensity of the activity. For example, the electronic device 101 may primarily determine the intensity of the activity, based on at least one piece of biometric sensing information, and then determine the type of the activity, based on at least one piece of movement sensing information. However, according to an embodiment, both sensing information may be used together to determine the type and/or the intensity of the activity, and there is no limit thereto.

In addition, other pieces of sensing information may be used to identify the type and/or the intensity of the activity, in addition to and/or as an alternative to the movement sensing information and/or the biometric sensing information, and there is no limit thereto. Meanwhile, in addition to the type and/or intensity of the activity, those skilled in the art will understand that at least one parameter, such as whether the user is in a vehicle, whether the user is in an airplane, whether the user has fallen, whether the user has been subjected to an impact, and/or whether the user has been involved in an accident, may be additionally and/or alternatively used as the user status information.

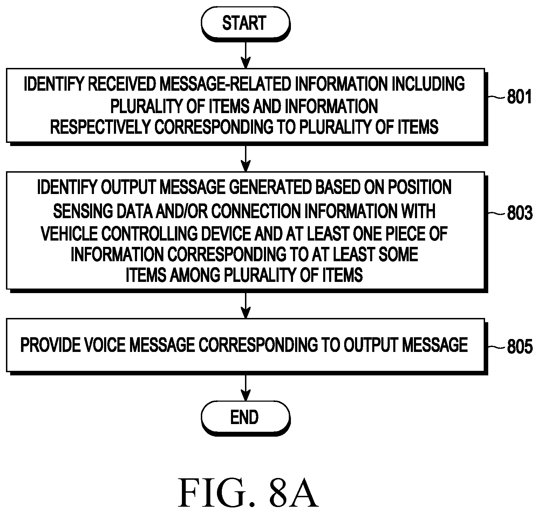

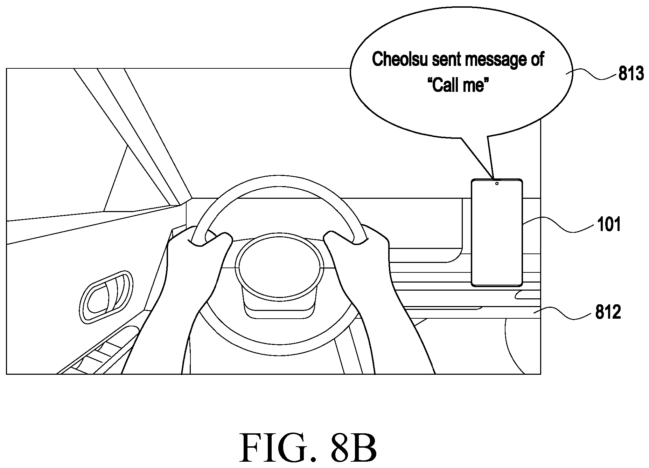

FIG. 8A is a flowchart illustrating a method of operating an electronic device according to an embodiment. The embodiment of FIG. 8A will be described with reference to FIG 8B. FIG. 8B is a diagram illustrating a connection with an external electronic device according to an embodiment. In the following embodiments, respective operations may be sequentially performed but the sequential performance is not necessary. For example, orders of the operations may be changed, and at least two operations may be performed in parallel.

According to an embodiment, the electronic device 101 (for example, the processor 120) may identify received message-related information including a plurality of items and information corresponding to each of the plurality of items in operation 801. The electronic device 101 may identify an output message generated based on position sensing data and/or connection information with a vehicle controlling device and at least one information corresponding to at least some items among the plurality of items in operation 803. The electronic device 101 may provide a voice message corresponding to the output message in operation 805. For example, the electronic device 101 may identify whether a user who possesses the electronic device 101 is riding in a vehicle, whether the vehicle is being driven, and/or a movement speed of the vehicle (or the electronic device 101), based on the position sensing data and/or the connection information with the vehicle controlling device. For example, the electronic device 101 may identify the movement speed of the electronic device 101, based on the position sensing data (or the time-series data thereof). The electronic device 101 may identify whether the user who possesses the electronic device 101 is riding in the vehicle, based on the movement speed. For example, when the movement speed is equal to or higher than a threshold speed, the electronic device 101 may identify that the user is riding in the vehicle. Alternatively, the electronic device 101 may identify whether the user is riding in the vehicle, based on whether the electronic device 101 is connected to a vehicle controlling device 812, as in FIG. 8B. For example, when it is identified that the electronic device 101 is connected to the vehicle controlling device 812, the electronic device 101 may identify that the user is riding in the vehicle. For example, the electronic device 101 may identify different output messages according to whether the user is riding in the vehicle. For example, when it is identified that the user is riding in the vehicle, the electronic device 101 may output a voice message 813 as in FIG. 8B. The voice message 813 may include summary information corresponding to a content item, for example, "Cheolsu sent a message of "Please give me a contact number."" Accordingly, in the case where the user is riding in the vehicle, the voice message including summary information may be provided so as not to cause a distraction of attention, or the voice message including only sender information may be provided according to an implementation. In the meantime, the electronic device 101 may provide the voice message based on information corresponding to the sender information item such as "Cheolsu sent a message. Would you like to know the content?". If a response such as "Yes" is received as an additional command from the user, the electronic device 101 may also provide the content of the received message. In addition, the electronic device 101 may inquire about the content of the received message and whether a response thereto is to be made, and when the response content is identified from the user, the electronic device 101 may perform at least one operation for transmitting a message including the identified response content.

According to an embodiment, for example, the electronic device 101 may identify the output message, based on a movement speed of a vehicle (or, the electronic device 101). For example, when the movement speed of the vehicle (or the electronic device 101) is included in a first range (e.g., a low-speed range), the electronic device 101 may identify an output message including relatively large amount of information. For example, when the movement speed of the vehicle (or the electronic device 101) is included in a second range (e.g., a medium-speed range), the electronic device 101 may identify an output message including relatively small amount of information (e.g., summary information about a content item and/or information corresponding to a relatively small number of items). For example, when the movement speed of the vehicle (or the electronic device 101) is included in a third range (e.g., a high-speed range), the electronic device 101 may suspend output of the voice message. When it is identified that the movement speed of the vehicle (or the electronic device 101) is out of the third range (e.g., a high-speed range), the electronic device 101 may provide the voice message.

For example, the electronic device 101 may identify whether the user's health is abnormal, based on sensing data obtained by at least one sensor module and/or camera module included in the electronic device 101 or included in an external electronic device operatively connected to the electronic device 101. If it is identified that the user's health is in an abnormal state, the electronic device 101 may provide a voice message for notifying the abnormal state. For example, the electronic device 101 may output a voice message such as "Arrhythmia has been detected while the user is driving. Park the vehicle on the shoulder and take a rest." The electronic device 101 may be configured to transmit a message for notifying of the abnormal state to a predetermined contact and/or an emergency telephone number. In addition, the electronic device 101 may identify nearby hospital information and output a voice message such as "The nearest XXX hospital has been found. Shall I guide you to the hospital?". As an additional command, when a voice such as "Guide me" is identified from the user, the electronic device 101 may provide content for route guidance to the found hospital. Alternatively, when the user's health condition is identified as unconscious, the electronic device 101 may transmit a message for informing of the abnormal condition to a predetermined contact, and/or an emergency phone number. The electronic device 101 may make a request for autonomous driving to a nearby hospital to the vehicle controlling device.

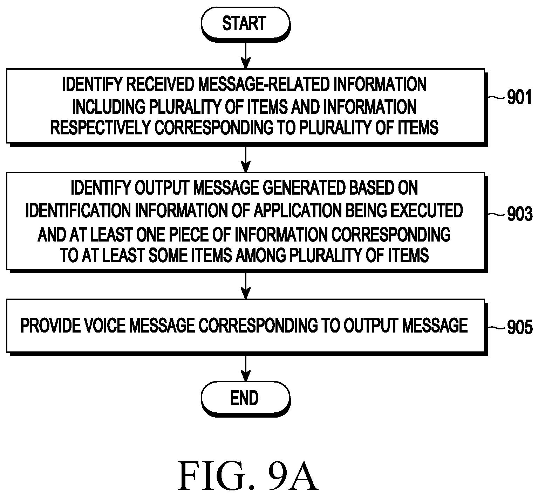

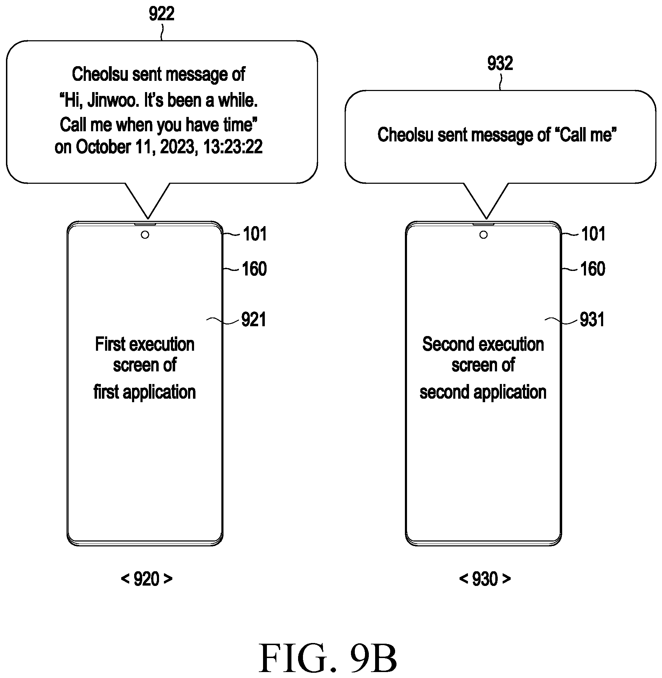

FIG. 9A is a flowchart illustrating a method of operating an electronic device according to an embodiment. The embodiment of FIG. 9A will be described with reference to FIG 9B. FIG. 9B is a diagram illustrating output of a voice message according to an embodiment. In the following embodiments, respective operations may be sequentially performed but the sequential performance is not necessary. For example, orders of the operations may be changed, and at least two operations may be performed in parallel.

According to an embodiment, the electronic device 101 (for example, the processor 120) may identify received message-related information including a plurality of items and information corresponding to each of the plurality of items in operation 901. The electronic device 101 may identify an output message generated based on identification information of an application being executed and at least one piece of information corresponding to at least some of the plurality of items in operation 903. The electronic device 101 may provide a voice message corresponding to the output message in operation 905. For example, as in a first example 920 of FIG. 9B, the electronic device 101 may execute a first application. Accordingly, a first execution screen 921 of the first application may be provided through the display module 160 of the electronic device 101. Meanwhile, the first application may be good in type even if, for example, the user's attention is dispersed. The electronic device 101 may output the voice message 922, based on identification information of the first application. The voice message 922 may include, for example, information (e.g., "Cheolsu") corresponding to a sender information item, information (e.g., "Hi, Jinwoo? It's been a while. Call me when you have time") corresponding to a content item, and information (e.g., "October 11, 2023, 13:23:22") corresponding to a reception time item. The voice message 922 corresponding to the identification information of the first application may be implemented to include, for example, relatively a large amount of information, but there is no limit.

According to an embodiment, for example, as in a second example 930 of FIG. 9B, the electronic device 101 may execute a second application. Accordingly, a second execution screen 931 of the second application may be provided through the display module 160 of the electronic device 101. Meanwhile, the second application may be good in type when, for example, the user's attention is not dispersed. The electronic device 101 may output the voice message 932, based on identification information of the second application. The voice message 932 may include, for example, information (e.g., "Cheolsu") corresponding to the sender information item, and summary information (e.g., "Call me") associated with a content item. The voice message 932 corresponding to the identification information of the second application may be implemented to include, for example, a relatively small amount of information, but there is no such limit. Accordingly, when an application requiring the user's attention is executed, the electronic device 101 may provide a voice message including a relatively small amount of information as a received message is identified, or when an application not requiring the user's attention is executed, the electronic device 101 may provide a voice message including a relatively large amount of information as a received message is identified. Meanwhile, according to an implementation, when an application requiring user's attention is executed, it is understood by those skilled in the art that the electronic device 101 may be implemented to provide a voice message including only information corresponding to the sender information item or suspend output of the voice message.

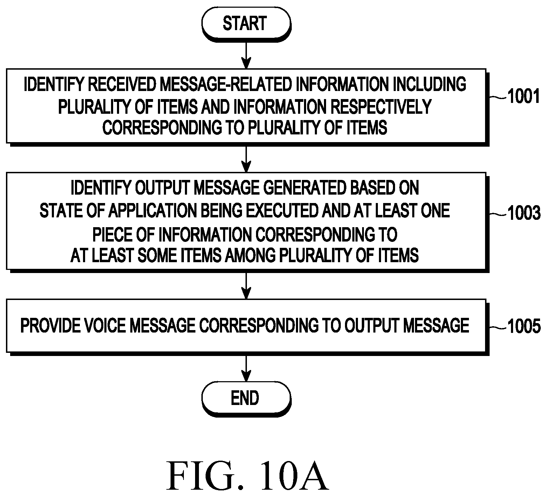

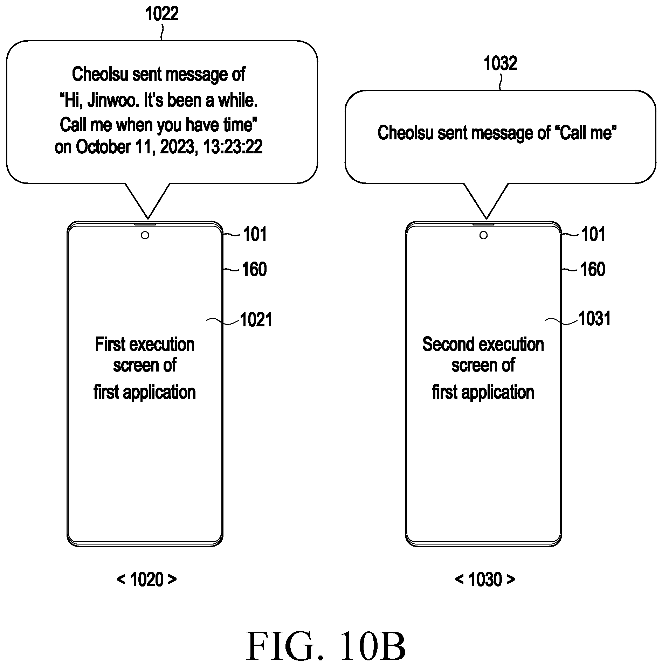

FIG. 10A is a flowchart illustrating a method of operating an electronic device according to an embodiment. The embodiment of FIG. 10A will be described with reference to FIG 10B. FIG. 10B is a diagram illustrating output of a voice message according to an embodiment. In the following embodiments, respective operations may be sequentially performed but the sequential performance is not necessary. For example, orders of the operations may be changed, and at least two operations may be performed in parallel.

According to an embodiment, the electronic device 101 (for example, the processor 120) may identify received message-related information including a plurality of items and information corresponding to each of the plurality of items in operation 1001. The electronic device 101 may identify an output message generated based on the state of an application being executed and at least one piece of information corresponding to at least some of the plurality of items in operation 1003. The electronic device 101 may provide a voice message corresponding to the output message in operation 1005. For example, as in a first example 1020 of FIG. 10B, the electronic device 101 may execute a first application. The first application may provide a plurality of application states. For example, when an application is a learning application, the learning application may provide various states such as a state for logging in, a state for providing learning contents, and a state for providing learning results. For example, it is assumed that a first execution screen 1021 of the first application corresponding to a first state of the first application is provided via the display module 160 in the first example 1020. For example, the first state of the first application may be good in type even if user's attention is dispersed. The electronic device 101 may output a voice message 1022, based on the state of the first application being the first state. The voice message 1022 may include, for example, information (e.g., "Cheolsu") corresponding to a sender information item, information (e.g., "Hi, Jinwoo. It's been a while. Call me when you have time") corresponding to a content item, and information (e.g., "October 11, 2023, 13:23:22") corresponding to a reception time item. The voice message 1022 corresponding to the first state of the first application may be implemented to include, for example, a relatively large amount of information, but there is no limit thereto.

For example, it is assumed that a second execution screen 1031 of the first application corresponding to a second state of the first application is provided through the display module 160 as in a second example 1030 of FIG. 10B. For example, the second state of the first application may be good in type when user's attention is not dispersed. The electronic device 101 may output a voice message 1032, based on the state of the first application being the second state. The voice message 1032 may include, for example, information (e.g., "Cheolsu") corresponding to the sender information item, and summary information (e.g., "Call me") associated with a content item. The voice message 1032 corresponding to the second state of the first application may be implemented to include, for example, a relatively small amount of information, but there is no limit thereto. Accordingly, the electronic device 101 may provide a voice message including a relatively small amount of information as a received message is identified when the state of the application is a state that requires the user's attention, or provide a voice message including a relatively large amount of information as a received message is identified when the state of the application is a state that does not require the user's attention. Meanwhile, according to an implementation, when the state of the application is a state requiring the user's attention, it is understood by those skilled in the art that the electronic device 101 may be implemented to provide a voice message including only information corresponding to the sender information item or may suspend output of the voice message.

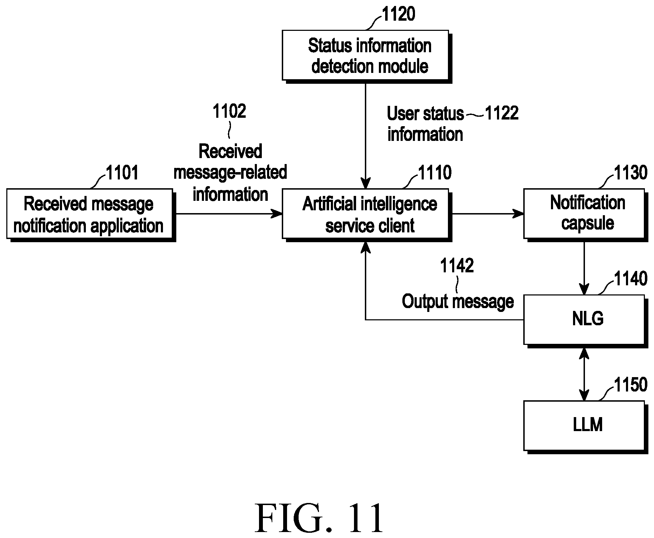

FIG. 11 is a diagram illustrating an entity providing a function according to an embodiment.

According to an embodiment, a received message notification application 1101 may provide received message-related information 1102. For example, the received message notification application 1101 may be executed by the electronic device 101 that receives the message, and may generate and provide the received message-related information 1102 based on the received message accordingly. Alternatively, the received message notification application 1101 may be executed by the electronic device 101 operatively connected to an external electronic device that receives the message. The received message notification application 1101 may also receive and provide the received message-related information 1102 from the external electronic device, and there is no limit to the method of providing the same. Information provided to an artificial intelligence service client 1110 may also be referred to as a perform intent request.

According to an embodiment, the artificial intelligence service client 1110 may identify the provided received message-related information 1102. The artificial intelligence service client 1110 may receive state user information 1122 from a status information detection module 1120. The status information detection module 1120 may identify status information, based on at least one of sensing data obtained based on at least one sensor module and/or camera module included in the electronic device 101 executing the status information detection module 1120 and/or the external electronic device operatively connected to the electronic device 101. The electronic device 101 may identify status information, based on identification information of an application and/or a state of the application, in addition to and/or as an alternative to at least one sensing data.

According to an embodiment, the artificial intelligence service client 1110 may make a request for generating an output message that notifies message reception to a notification capsule 1130. For example, the notification capsule 1130 may include the received message-related information 1102 and/or the user status information 1122, but there is no limit thereto.

The notification capsule 1130 may make a request for generating the output message that notifies message reception to a natural language generator (NLG) 1140. For example, the notification capsule 1130 may execute a function and/or program (or algorithm, and/or instruction) (or may be named as a proactive notification goal) for providing a voice message, based on a received request. The proactive notification goal may include, for example, an output message generation module (or may be referred to as a response NLG generator module), and/or may execute the same. Meanwhile, the request provided to the NLG 1140 may include the received message-related information 1102 and/or the user status information 1122, but there is no limit thereto. Meanwhile, the notification capsule 1130 may operate according to one of a plurality of modes. When the notification capsule 1130 operates in a voice message selection mode (or may also be referred to as a proactive mode) according to the status information, operations according to the disclosure may also be performed. The NLG 1140 may generate an output message 1142 in response to a request. For example, the NLG 1140 may generate the output message 1142, based on the provided received message-related information 1102 and/or the user status information 1122. If the summary of information corresponding to a content item of the received message is required based on the user status information 1122, the NLG 1140 may obtain the summary information by using the LLM 1150, but the disclosure is not limited thereto. The NLG 1140 may provide the output message 1142 to the artificial intelligence service client 1110. The artificial intelligence service client 1110 may perform text-to-speech (TTS) on the output message 1142, and output a voice message, based on a result of the TTS. Meanwhile, depending on the user status information, output of the voice message may be suspended, in which case the output message may be stored in a buffer (or may be referred as a pending notification intent storage). When an event for outputting the suspended voice message is detected, the artificial intelligence service client 1110 may provide the voice message corresponding to the output message stored in the buffer.

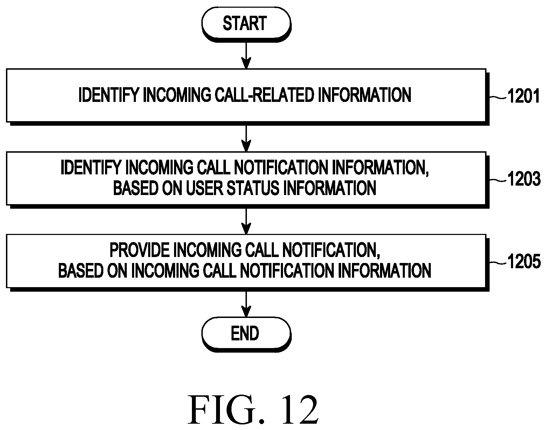

FIG. 12 is a flowchart illustrating a method of operating an electronic device according to an embodiment. In the following embodiments, respective operations may be sequentially performed but the sequential performance is not necessary. For example, orders of the operations may be changed, and at least two operations may be performed in parallel.

According to an embodiment, the electronic device 101 (e.g., the processor 120) may identify incoming call-related information in operation 1201. The incoming call-related call may include, for example, information on a caller, but is not limited thereto. In an example, it is assumed that the information on the caller is "Hong Gil-dong." The electronic device 101 may identify incoming call notification information, based on status information of the user in operation 1203. The electronic device 101 may provide an incoming call notification, based on the incoming call notification information in operation 1205. For example, when the status information of the user is identified as a state of no movement or a state of low-intensity activity, the electronic device 101 may display a screen including the information on the caller and/or output a ringtone (or a vibration). For example, when the status information of the user is identified as a state of medium-intensity activity, the electronic device 101 may output a voice message of "You have a call from Hong Gil-dong." The electronic device 101 may additionally display a screen including the information on the caller, but there is no limit thereto. For example, when the status information of the user is identified as a state of high-intensity activity, the electronic device 101 may perform an operation of transmitting a message of "The user (e.g., Cheolsu) is running now. I will inform you when the exercise is over." to the caller. For example, when an incoming call barring function during activity is previously configured, the electronic device 101 may be configured to reject the incoming call and transmit the message described above. If it is identified that the high-intensity activity has ended, the electronic device 101 may output the content of "You have a missed call from Hong Gil-dong. Shall I make a call?" and, if a command for making a call is identified from the user, the electronic device 101 may perform at least one operation for making a call.

According to an embodiment, a computer-readable storage medium storing at least one instruction may be provided. The at least one instruction may cause, when executed by at least one processor 102 of an electronic device 101, the electronic device 101 to perform at least one operation. The at least one operation may include an operation of identifying information associated with a received message including a plurality of items and a plurality pieces of information respectively corresponding to the plurality of items. The at least one operation may include an operation of identifying status information of a user. The at least one operation may include an operation of identifying an output message which is generated based on the status information of the user and at least one piece of information respectively corresponding to at least one item of the plurality of items. The at least one operation may include an operation of providing a voice message corresponding to the output message.

According to an embodiment, the operation of identifying the output message which is generated based on the status information of the user and at least one piece of information respectively corresponding to at least one item of the plurality of items may include, based on the status information of the user, identifying the output message including at least part of information corresponding to content item of the plurality of items, or identifying the output message including summary information corresponding to the content item.

According to an embodiment, the operation of identifying the output message which is generated based on the status information of the user and at least one piece of information respectively corresponding to at least one item of the plurality of items may include identifying the output message generated based on information corresponding to at least one item among the plurality of the items which is determined based on the status information of the user.

According to an embodiment, the operation of providing the voice message corresponding to the output message may include, based on the status information of the user, identifying whether an event which is configured for outputting the voice message is detected or not. The at least part of the information associated with the received message and/or the output message may be at least temporally stored in the electronic device 101 before the event is detected. The operation of providing the voice message corresponding to the output message may include, based on the event being detected, providing the voice message.

According to an embodiment, the operation of identifying the status information of the user may include identifying the status information of the user, based on at least one movement sensing data from at least one first movement sensor included in the electronic device 101 and/or at least one second movement sensor included in an external electronic device operatively connected to the electronic device 101.

According to an embodiment, the operation of identifying the status information of the user may include, based on the at least one movement sensing data, identifying a type of an activity and/or a intensity of the activity as the status information of the user.

According to an embodiment, the operation of identifying the status information of the user may include identifying the status information of the user, based on at least one biometric sensing data from at least one first biometric sensor included in the electronic device 101 and/or at least one second biometric sensor included in an external electronic device operatively connected to the electronic device 101.

According to an embodiment, the operation of identifying the status information of the user may include, based on the at least one biometric sensing data, identifying a type of an activity and/or a intensity of the activity as the status information of the user.

According to an embodiment, the operation of identifying the status information of the user may include identifying the status information of the user, based on information associated with connection to a vehicle controlling device, and/or at least one position sensing data from at least one first position sensor included in the electronic device 101 and/or at least one second position sensor included in an external electronic device operatively connected to the electronic device 101.

According to an embodiment, the operation of identifying the status information of the user may include, based on the at least one position sensing data, identifying information indicating whether the electronic device 101 is positioned in a vehicle and/or speed of the electronic device 101 as the status information of the user.

According to an embodiment, the operation of identifying the status information of the user may include identifying a type of an application executed by the electronic device 101 as the status information of the user.

According to an embodiment, the operation of identifying the status information of the user may include identifying a state of an application executed by the electronic device 101 as the status information of the user.

According to an embodiment, the at least one operation may include an operation of, after providing the voice message, monitoring whether an additional command is identified or not. The at least one operation may include an operation of, based on the additional command being identified according to the monitoring result, performing at least one operation corresponding to the additional command.

According to an embodiment, a method of operating an electronic device 101 may be provided. The method of operating the electronic device 101 may include an operation of identifying information associated with a received message including a plurality of items and a plurality pieces of information respectively corresponding to the plurality of items. The method of operating the electronic device 101 may include an operation of identifying status information of a user. The method of operating the electronic device 101 may include an operation of identifying an output message which is generated based on the status information of the user and at least one piece of information respectively corresponding to at least one item of the plurality of items. The method of operating the electronic device 101 may include an operation of providing a voice message corresponding to the output message.

According to an embodiment, the operation of identifying the output message which is generated based on the status information of the user and at least one piece of information respectively corresponding to at least one item of the plurality of items may include, based on the status information of the user, identifying the output message including at least part of information corresponding to content item of the plurality of items, or identifying the output message including summary information corresponding to the content item.

According to an embodiment, the operation of identifying the output message which is generated based on the status information of the user and at least one piece of information respectively corresponding to at least one item of the plurality of items may include identifying the output message generated based on information corresponding to at least one item among the plurality of the items which is determined based on the status information of the user.

According to an embodiment, the operation of providing the voice message corresponding to the output message may include an operation of, based on the status information of the user, identifying whether an event which is configured for outputting the voice message is detected or not. The at least part of the information associated with the received message and/or the output message may be at least temporally stored in the electronic device 101 before the event is detected. The operation of providing the voice message corresponding to the output message may include an operation of, based on the event being detected, providing the voice message.

According to an embodiment, the operation of identifying the status information of the user may include identifying the status information of the user, based on at least one movement sensing data from at least one first movement sensor included in the electronic device 101 and/or at least one second movement sensor included in an external electronic device operatively connected to the electronic device 101.

According to an embodiment, the operation of identifying the status information of the user may include, based on the at least one movement sensing data, identifying a type of an activity and/or a intensity of the activity as the status information of the user.

According to an embodiment, the operation of identifying the status information of the user may include identifying the status information of the user, based on at least one biometric sensing data from at least one first biometric sensor comprised in the electronic device 101 and/or at least one second biometric sensor comprised in an external electronic device operatively connected to the electronic device 101.

According to an embodiment, the operation of identifying the status information of the user may include, based on the at least one biometric sensing data, identifying a type of an activity and/or a intensity of the activity as the status information of the user.

According to an embodiment, the operation of identifying the status information of the user may include identifying the status information of the user, based on information associated with connection to a vehicle controlling device, and/or at least one position sensing data from at least one first position sensor comprised in the electronic device 101 and/or at least one second position sensor comprised in an external electronic device operatively connected to the electronic device 101.

According to an embodiment, the operation of identifying the status information of the user may include, based on the at least one position sensing data, identifying information indicating whether the electronic device 101 is positioned in a vehicle and/or speed of the electronic device 101 as the status information of the user.

According to an embodiment, the operation of identifying the status information of the user may include identifying a type of an application executed by the electronic device 101 as the status information of the user.

According to an embodiment, the operation of identifying the status information of the user may include identifying a state of an application executed by the electronic device 101 as the status information of the user.

According to an embodiment, method of operating the electronic device 101 may include an operation of, after outputting the voice message, monitoring whether an additional command is identified or not. The at least one operation may include an operation of, based on the additional command being identified according to the monitoring result, performing at least one operation corresponding to the additional command.

According to an embodiment, an electronic device 101 may include memory 130 and a processor 120 operatively connected to the memory 130. The memory 130 may store at least one instruction. The at least one instruction may cause, when executed by the at least one processor 102 of the electronic device 101, the electronic device 101 to perform at least one operation. The at least one operation may include an operation of identifying information associated with a received message including a plurality of items and a plurality pieces of information respectively corresponding to the plurality of items. The at least one operation may include an operation of identifying status information of a user. The at least one operation may include an operation of identifying an output message which is generated based on the status information of the user and at least one piece of information respectively corresponding to at least one item of the plurality of items. The at least one operation may include an operation of providing a voice message corresponding to the output message.

According to an embodiment, a computer-readable storage medium storing at least one instruction may be provided. The at least one instruction may cause, when executed by the at least one processor 102 of the electronic device 101, the electronic device 101 to perform at least one operation. The at least one operation may include an operation of identifying information associated with a received message including a plurality of items and a plurality pieces of information respectively corresponding to the plurality of items. The at least one operation may include an operation of identifying status information of a user. The at least one operation may include an operation of providing a first output message including at least part of information corresponding to content item of the plurality of items, based on the status information of the user being first status information, or providing a second output message including summary information associated with the information corresponding to the content item, based on the status information of the user being second status information different from the first status information.

According to an embodiment, a method of operating an electronic device 101 may be provided. The method of operating the electronic device 101 may include an operation of identifying information associated with a received message including a plurality of items and a plurality pieces of information respectively corresponding to the plurality of items. The method of operating the electronic device 101 may include an operation of identifying status information of a user. The method of operating the electronic device 101 may include an operation of providing a first output message including at least part of information corresponding to content item of the plurality of items, based on the status information of the user being first status information, or providing a second output message including summary information associated with the information corresponding to the content item, based on the status information of the user being second status information different from the first status information.

According to an embodiment, an electronic device 101 may include memory 130 and a processor 120 operatively connected to the memory 130. The memory 130 may store at least one instruction. The at least one instruction may cause, when executed by the at least one processor 102 of the electronic device 101, the electronic device 101 to perform at least one operation. The at least one operation may include an operation of identifying information associated with a received message including a plurality of items and a plurality pieces of information respectively corresponding to the plurality of items. The at least one operation may include an operation of identifying status information of a user. The at least one operation may include an operation of providing a first output message including at least part of information corresponding to content item of the plurality of items, based on the status information of the user being first status information, or providing a second output message including summary information associated with the information corresponding to the content item, based on the status information of the user being second status information different from the first status information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. A non-transitory computer readable medium storing at least one instruction, wherein the at least one instruction, when executed by at least one processor (201) of an electronic device (101), causes the electronic device (101) to perform at least one operation, the at least one operation comprising:
identifying information associated with a received message comprising a plurality of items and a plurality pieces of information respectively corresponding to the plurality of items;
identifying status information of a user;
identifying an output message which is generated based on the status information of the user and at least one piece of information respectively corresponding to at least one item of the plurality of items; and
providing a voice message corresponding to the output message.

2. The non-transitory computer readable medium of claim 1, wherein identifying the output message which is generated based on the status information of the user and at least one piece of information respectively corresponding to at least one item of the plurality of items comprises
based on the status information of the user, identifying the output message comprising at least part of information corresponding to content item of the plurality of items, or identifying the output message comprising summary information corresponding to the content item.

3. The non-transitory computer readable medium of one of claims 1 to 2, wherein identifying the output message which is generated based on the status information of the user and at least one piece of information respectively corresponding to at least one item of the plurality of items comprises:
identifying the output message generated based on information corresponding to at least one item among the plurality of the items which is determined based on the status information of the user.

4. The non-transitory computer readable medium of one of claims 1 to 3, wherein providing the voice message corresponding to the output message comprises:
based on the status information of the user, identifying whether an event which is configured for outputting the voice message is detected or not, wherein at least part of the information associated with the received message and/or the output message is at least temporally stored in the electronic device before the event is detected; and
based on the event being detected, providing the voice message.

5. The non-transitory computer readable medium of one of claims 1 to 4, wherein identifying the status information of the user comprises:
identifying the status information of the user, based on at least one movement sensing data from at least one first movement sensor comprised in the electronic device (101) and/or at least one second movement sensor comprised in an external electronic device operatively connected to the electronic device (101).

6. The non-transitory computer readable medium of one of claims 1 to 5, wherein identifying the status information of the user comprises:
based on the at least one movement sensing data, identifying a type of an activity and/or a intensity of the activity as the status information of the user.

7. The non-transitory computer readable medium of one of claims 1 to 6, wherein identifying the status information of the user comprises:
identifying the status information of the user, based on at least one biometric sensing data from at least one first biometric sensor comprised in the electronic device (101) and/or at least one second biometric sensor comprised in an external electronic device operatively connected to the electronic device (101).

8. The non-transitory computer readable medium of one of claims 1 to 7, wherein identifying the status information of the user comprises:
based on the at least one biometric sensing data, identifying a type of an activity and/or a intensity of the activity as the status information of the user.

9. The non-transitory computer readable medium of one of claims 1 to 8, wherein identifying the status information of the user comprises:
identifying the status information of the user, based on information associated with connection to a vehicle controlling device, and/or at least one position sensing data from at least one first position sensor comprised in the electronic device (101) and/or at least one second position sensor comprised in an external electronic device operatively connected to the electronic device (101).

10. The non-transitory computer readable medium of one of claims 1 to 9, wherein identifying the status information of the user comprises:
based on the at least one position sensing data, identifying information indicating whether the electronic device (101) is positioned in a vehicle and/or speed of the electronic device (101) as the status information of the user.

11. The non-transitory computer readable medium of one of claims 1 to 10, wherein identifying the status information of the user comprises:
identifying a type of an application executed by the electronic device (101) as the status information of the user.

12. The non-transitory computer readable medium of one of claims 1 to 11, wherein identifying the status information of the user comprises:
identifying a state of an application executed by the electronic device (101) as the status information of the user.

13. The non-transitory computer readable medium of one of claims 1 to 12, wherein the at least one operation further comprises:
after providing the voice message, monitoring whether an additional command is identified or not; and
based on the additional command being identified according to the monitoring result, performing at least one operation corresponding to the additional command.

14. A method of operating an electronic device (101), the method comprising:
identifying information associated with a received message comprising a plurality of items and a plurality pieces of information corresponding to the plurality of items respectively;
identifying status information of a user;
identifying an output message which is generated based on the status information of the user and at least one piece of information corresponding to at least some items among the plurality of items; and
providing a voice message corresponding to the output message.

15. The method of claim 14, wherein the identifying of the output message which is generated based on the status information of the user and the at least one piece of information corresponding to the at least someitems among the plurality of items comprises, based on the status information of the user, identifying the output message comprising at least part of information corresponding to a content item among the plurality of items or identifying the output message comprising summary information of the information corresponding to the content item.
